# EUROPEAN PATENT APPLICATION

(11) **EP 4 787 172 A1**
(43) Date of publication of application: **05.08.2026**
(21) Application number: 25199182.4
(22) Date of filing: 29.08.2025
(51) Int. Cl.: G06F 12/02

(54) **METHODS AND DEVICES FOR EFFICIENT DATA WRITING TO A STORAGE DEVICE**

(30) Priority: 04.02.2025 IN 202541009186; 20.05.2025 IN 202541009186
(71) Applicant: Samsung Electronics Co., Ltd., Suwon-si, Gyeonggi-do 16677 (KR)
(72) Inventor: BALAKRISHNAN, Rakesh, 560048 Bengaluru (IN); VISHNOI, Suresh, 560048 Bengaluru (IN)
(74) Representative: Marks & Clerk LLP

(57) **Abstract**

The present disclosure, methods, and devices for efficiently writing data to a storage device are disclosed. The method may include receiving, from a host device, one or more commands to write data in the NAND flash memory region of the storage device, wherein each command having a data block and a write request to write the data block in a page of the NAND flash memory region; performing a set of operations of a predefined routine, based on the one or more commands; preventing transmission of a first completion indication of the set of operations to the host device; receiving data blocks associated with each command, the data blocks being associated with a subsequent set of operations of the predefined routine; and performing the subsequent set of operations of the predefined routine, based on receiving the data blocks for writing the data to the NAND flash memory region.

## Description

### BACKGROUND

### 1. Field

The present disclosure generally relates to storage devices. Particularly, the present disclosure relates to techniques for efficient data writing to a storage device (e.g., a Solid-State Drive (SSD) device).

### 2. Related Art

In hybrid Solid State Drives (SSDs) consisting of a Quad Level Cell (QLC) region, data can only be read after all steps of a predefined QLC program are completed. The predefined QLC program is a standard multi step program by which data is written to the QLC region of the SSD. The data is completely written to the QLC region when all the steps of the multi-step QLC program have been executed. Since, the QLC program is carried out at multiple stages, it usually requires data to be cached before proceeding with the next step of execution.

However, products without Dynamic Random Access Memory (DRAM) have limited memory resources and are constrained with respect to the data required to be cached for implementing a complete QLC program. In related systems, to overcome the above constraints, the data to be written to QLC is usually first written to Single Level Cell (SLC) or Triple Level Cell (TLC) regions and then migrated to the QLC region. This greatly affects the performance of SSDs.

Thus, there exists a need for overcoming the above constraints and providing further improvements in the SSDs.

The information disclosed in this background of the disclosure section is only for enhancement of understanding of the general background of the invention and should not be taken as an acknowledgement or any form of suggestion that this information forms the prior art already known to a person skilled in the art.

### SUMMARY

According to an aspect of the present disclosure, methods and devices are provided for efficient data writing to a storage device.

In a non-limiting embodiment of the present disclosure, a method for writing data to a NOT AND (NAND) flash memory region of a storage device is provided. The method includes receiving, from a host device, one or more commands to write data in the NAND flash memory region of the storage device, wherein each command of the one or more commands includes a data block and a write request to write the data block in a page of the NAND flash memory region; performing a set of operations of a predefined routine for writing the data to the NAND flash memory region, based on the one or more commands; preventing a transmission of a first completion indication of the set of operations to the host device; receiving data blocks associated with the one or more commands from the host device, the data blocks being associated with a subsequent set of operations of the predefined routine; and performing the subsequent set of operations of the predefined routine, based on receiving the data blocks for writing the data to the NAND flash memory region.

In a non-limiting embodiment of the present disclosure, a storage device for writing data to a NAND flash memory region is provided. The storage device includes a Non-Volatile Memory (NVM) comprising the NAND flash memory region; and at least one processor configured to collectively or individually: receive, from a host device, one or more commands to write the data in the NAND flash memory region, wherein each command of the one or more commands includes a data block and a write request to write the data block in a page of the NAND flash memory region; perform a set of operations of a predefined routine for writing the data to the NAND flash memory region, based on the one or more commands; prevent a transmission of a first completion indication of the set of operations to the host device; receiving data blocks associated with the one or more commands from the host device, the data blocks being associated with a subsequent set of operations of the predefined routine; and perform the subsequent set of operations of the predefined routine based on receiving the data blocks for writing the data to the NAND flash memory region.

In a non-limiting embodiment of the present disclosure, a method of enabling writing of data to a NAND flash memory region of a storage device is provided. The method includes transmitting, by a host device, one or more commands to write data in the NAND flash memory region of the storage device, wherein each command of the one or more commands includes a data block and a write request to write the data block in a page of the NAND flash memory region; and enabling a direct write mode of the storage device for writing the data to the NAND flash memory region.

At least some of the above features and others are set out in the claims.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

Further aspects and advantages of the present disclosure will be readily understood from the following detailed description with reference to the accompanying drawings. Reference numerals have been used to refer to identical or functionally similar elements. The figures together with a detailed description below are incorporated in and form part of the specification and serve to further illustrate the embodiments and explain various principles and advantages, in accordance with the present disclosure wherein:
Fig. 1A illustrates a sequence diagram illustrating a sequence of operations involved in partial execution of a write command on a storage device in accordance with techniques in related art.
Fig. 1B illustrates an environment diagram illustrating a partial execution of a write command received from a host device in accordance with techniques in related art.
Fig. 2 illustrates a detailed block diagram of an example storage system, in accordance with an example embodiment of the present disclosure.
Fig. 3A illustrates a sequence diagram illustrating a sequence of operations involved in execution of a write command, in accordance with the embodiments of the present disclosure.
Fig. 3B illustrates environment diagrams illustrating partial execution of a write command in at least two program operations, in accordance with the embodiments of the present disclosure.
Fig. 4 illustrates an example flow chart of a process for writing data to a storage device, in accordance with the embodiments of the present disclosure.
Fig. 5 illustrates an example flow chart of a process for enabling writing of data to the storage device, in accordance with the embodiments of the present disclosure.

### DETAILED DESCRIPTION

While the disclosure describes specific embodiments, it must be understood that the specific embodiments have been shown by way of example and will be described in detail herein. It should be understood, however that it is not intended to limit the disclosure to the particular forms disclosed, but on the contrary, the disclosure is to cover all modifications, equivalents, and alternatives falling within the scope of the disclosure.

The terms like "SSD" and "SSD device" have been used interchangeably throughout the disclosure. Further, the terms like "host" and "host device" have been used interchangeably throughout the disclosure. The terms like "storage device interface" and "device interface" have been used interchangeably throughout the disclosure. The terms like "controller" and "processor" have been used interchangeably throughout the disclosure.

A Solid-State Drive (SSD) device may comprise (e.g. consist of) a Quad Level Cell (QLC) region to store data. Other hybrid SSDs may include a NOT AND (NAND) flash memory having combination of SLC (Single Level Cell), MLC (Multi Level Cell), and TLC (Triple Level Cell) regions to store data. SLC memory stores 1 bit per cell, and is known for its high endurance, fast read and write speeds, and low probability of read/write errors. However, the SLC memory is more expensive (e.g. per bit of storage) than other types of NAND flash memory. MLC memory stores 2 bits per cell. TLC memory stores 3 bits per cell. TLC memory has higher reliability and write endurance than QLC memory, but lower reliability than SLC and MLC memories. QLC memories store 4 bits per cell. The QLC memories are popularly used in systems having read-intensive workloads.

To write data to the QLC region of a SSD, a multi-step QLC program is executed. The data can only be read from the QLC region once all steps of the predefined QLC program are completed, otherwise the data written is rendered invalid, i.e., it results in an uncorrectable error (e.g. an Uncorrectable Error Correction Code (UECC)). The QLC program is associated with a predefined value known as a program distance. The program distance is measured in terms of a memory page size of the QLC region. For a program distance value of N, N memory pages worth of data must be written in a step of the QLC program. In the subsequent steps of the QLC program, the data writing process is completed, and then a completion indication is sent to the host device.

Since, the QLC program is carried out in multiple stages, it usually requires data to be cached before proceeding with the next step of execution. In some SSDs, the data to be written is cached in Static Random-Access Memory (SRAM) before direct write to the QLC region. However, Dynamic Random-Access Memory (DRAM)-less SSDs make it inconvenient to write data to the QLC region, because of their limited SRAM capacity.

Further in some cases, instead of directly writing data to the QLC region, the data to be written is staged and first stored in a SLC buffer. This requirement of staging data before it is finally written to significantly impacts the write performance of SSDs.

Another method known in related art is the usage of Host Memory Buffer (HMB) to do direct write to QLC. Typically, a host device utilizes the HMB buffer for facilitating the storing of metadata/user data. In related techniques, the HMB buffer is utilized by the storage device as a cache for caching the data required for direct write to QLC. However, this involves a processing overhead of redirecting the data that is received by a storage device from the host to HMB and then once again transferring the data from HMB to storage device, thereby significantly impacting the write performance of SSDs.

Therefore, the above-mentioned methods suffer from various limitations which greatly impacts the SSD performance. Specifically, the methods fail to overcome the issue of staging the QLC write operation and fail to perform a direct write to QLC efficiently.

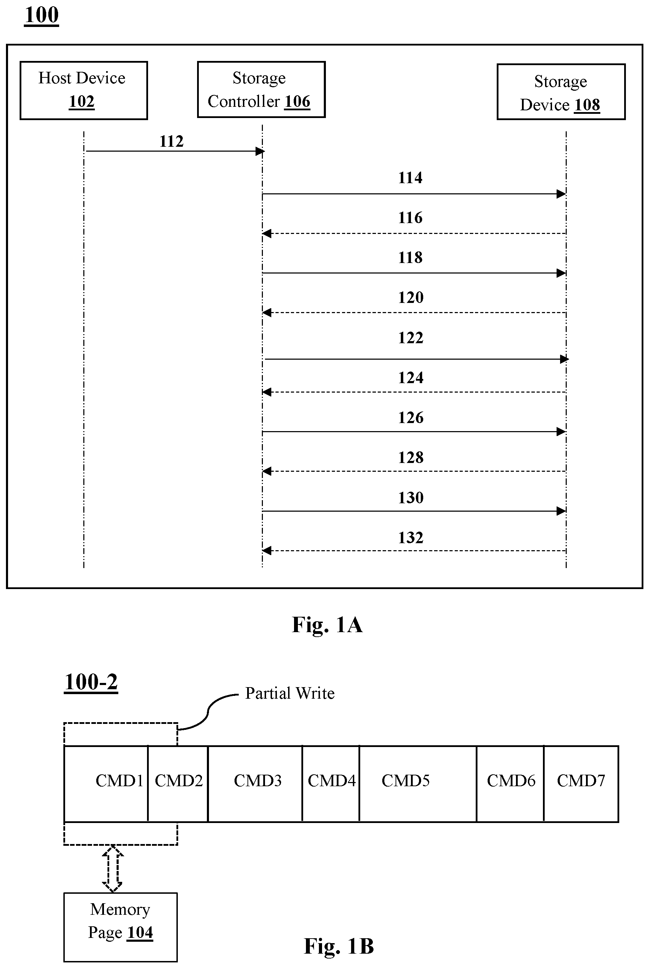

Referring now to Fig. 1A which illustrates a sequence diagram 100 showing sequence of operations involved in a partial execution of a write command on a storage device in accordance with techniques in related art.

As illustrated in Fig. 1A, a typical staged QLC write involves three components of a storage system, e.g., a host device 102, a storage controller 106, and a storage device 108. At operation 112, the host device 102 transmits commands to the storage controller 106 for writing data to a QLC region of the storage device 108. The data to be written is transferred to a SRAM. At operation 114, an SLC program is issued by the storage controller 106 to write data temporarily to a SLC buffer. At operation 116, the storage device 108 sends an indication of SLC program completion to the storage controller 106, to indicate that the data is temporarily stored in the SLC buffer. To initiate the process of QLC data write, at operation 118, the storage controller 106 issues an SLC read command to read the data written in the SLC buffer. At operation 120, the storage device 108 sends an indication of SLC read completion to the storage controller 106, to indicate that the data has been read from the SLC buffer. Upon retrieving the read data from the SLC buffer, at operation 122 a first step of the QLC program is issued for execution. Upon completion of the first step of the QLC program at operation 124, the storage device 108 sends an indication of completion of the QLC program to the storage controller 106. To perform the further steps of the QLC program, at operation 126 data is re-fetched from the SLC buffer, by issuing a SLC read command to read the data from the SLC buffer. At operation 128, the storage device 108 sends an indication of SLC read completion to the storage controller 106, to indicate that the data read from the SLC buffer. Upon retrieving the data from the SLC buffer, at operation 130 the subsequent steps of the QLC program is issued for execution. Finally, upon completion of the subsequent steps of the QLC program, at operation 132 the storage device 108 sends an indication of completion of the QLC program to the storage controller 106.

Fig. 1A is an illustration of a technique in related art that includes multiple steps of staging the data to be written at the SLC buffer. As soon as the data is received from the host device 102, via the one or more write commands, the data is staged at the SLC buffer and later fetched to perform the various steps of the QLC program. However, this approach has various limitations i.e., it involves multiple writes and re-reads to SLC region, increasing the latency of the write operation.

Fig. 1B illustrates an environment diagram 100-2 showing technique in related art for partial execution of a write command received from a host device 102. This technique addresses the unevenness of memory pages that are available for write operations. In particular, when multiple write commands from the host device 102 are sent for execution to the storage device 108, a partial execution may be implemented based on the preferred size of the page to be programmed in an SLC mode, an MLC mode, a TLC mode, or a QLC mode.

As illustrated in Fig. 1B, the host device 102 sends a total of seven write commands (e.g., CMD1, CMD2......CMD7) to the storage device 108 for execution. The storage device 108 may execute CMD1 and partially execute CMD2 based on a size of a memory page 104 that is currently available for writing data onto it. The memory page 104 may be programmed (writing data) in an SLC mode or a QLC mode. Typically, the write command issued by the host device 102 provides the data to be written to the storage device 108. In some embodiments, the data size is also specified in the write command. The conventional techniques of partial execution determines the preferred size of the data that may be written to the memory page 104, based on the physical layout of the storage device 108. Thus, related methods partially write data corresponding to a write command onto the memory page 104. In particular, the host device 102 can configure the subsequent write commands based on the preferred size of the data that has to been written into the storage device 108.

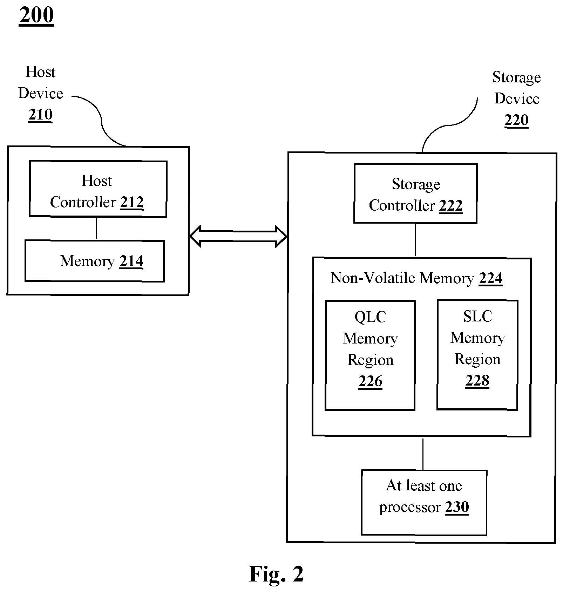

Fig. 2 illustrates a detailed block diagram of an example storage system 200, where the techniques consistent with the present disclosure may be implemented. As shown in Fig. 2, the storage system 200 comprises a host device 210 operatively coupled with a storage device 220 via a host interface and a storage device interface respectively. The host device 210 may comprise at least one host controller 212 or processor and a host memory 214. The host memory 214 may store data to be transmitted to the storage device 220 or data received from the storage device 220. Likewise, the storage device 220 may comprise a storage controller 222, at least one processor 230 and a non-volatile memory (NVM) 224. In one embodiment, the storage controller 222 and the at least one processor 230 are integrated as a single component. The host controller 212 may comprise a host front-end module that controls the data transfers from the host memory 214 and communicates with the storage controller 222. The storage controller 222 may comprise various control components such as a storage front-end module and a storage back-end module. In one embodiment, the storage controller 222 may comprise a flash controller that controls access to a NAND flash memory of the NVM 224.

In a non-limiting embodiment, the host device 210 of Fig. 2 may be any device such as, but not limited to, a portable communication terminal (e.g., a mobile phone), a smartphone, a tablet personal computer (PC), a wearable device, a healthcare device, an Internet of things (IOT) device, a Personal Computer (PC), a laptop computer, a server, a media player, or an automotive device (e.g., a navigation device). Further, the host device 210 may comprise one or more image capturing means, one or more input means, one or more output means, one or more sensors, at least one display means, at least one power source, and at least one connecting interface, but not limited thereto. The host memory 214 may be a volatile memory, such as static random-access memory (SRAM) and/or dynamic RAM (DRAM).

In a non-limiting embodiment, the host controller 212 and the host memory 214 may be implemented as separate semiconductor chips. Alternatively, in some embodiments, the host controller 212 and the host memory 214 may be integrated on the same semiconductor chip. As an example, the host controller 212 may be any one of a plurality of modules included in an application processor (AP). The AP may be implemented as a System on Chip (SoC). Further, the host memory 214 may be an embedded memory included in the AP or an NVM or a memory module located outside the AP. The host controller 212 may manage an operation of storing data (e.g., write data) in the NVM 224.

The storage device 220 may be a storage media configured to store data in response to I/O requests from the host device 210. As an example, the storage device 220 may include at least one of an SSD, an embedded memory, and a removable external memory. When the storage device 220 is an SSD, the storage device 220 may be a device that conforms to the Non-Volatile Memory Express (NVMe) protocol. NVMe SSDs provides superior storage, speed and compatibility compared to other types of SSDs. When the storage device 220 is an embedded memory or an external memory, the storage device 220 may be a device that conforms to a Universal Flash Storage (UFS) standard or an Embedded Multi Media Card (eMMC) standard.

In a non-limiting embodiment, the storage device 220 of Fig. 2 serves as a non-volatile storage device configured to store data regardless of whether power is supplied or not. The NVM 224 may be a flash memory and may comprise a 2-Dimensional (2D) NAND memory array or a 3-Dimensional (3D) (or vertical) NAND (VNAND) memory array. As another example, the storage device 220 may include various other kinds of NVMs. For example, the storage device 220 may include Magnetic RAM (MRAM), Spin-Transfer Torque MRAM (STT-MRAM), Conductive Bridging RAM (CB-RAM), Ferroelectric RAM (FRAM), Phase Change RAM (PRAM), Resistive RAM (RRAM), and various other kinds of non-volatile memories. In a non-limiting embodiment, the NVM 224 may comprise a plurality of cells, each of which may typically store a single binary digit or bit of information. In a non-limiting embodiment, the NVM 224 may comprise one or more NAND flash memory region of the storage device, where the NAND flash memory region may be one of: one Single Level Cell (SLC) memory region 228 and a Quad Level Cell (QLC) memory region 226.

In a non-limiting embodiment, the storage device 220 may be physically separated from the host controller 212 or implemented in the same package as the host controller 212. The storage device 220 may be removably coupled with the host device 210 through one or more interfaces such as the host interface and the storage interface, which enable exchange of read/write (I/O) requests and data between the host device 210 and the storage device 220. The host interface may be communicatively or operatively coupled with the host device 210 and the storage interface may be communicatively coupled with the storage device 220. The storage interface may be implemented using various interface technologies, such as Advanced Technology Attachment (ATA), Serial ATA (SATA), external SATA (e-SATA), Small Computer Small Interface (SCSI), Serial Attached SCSI (SAS), Peripheral Component Interconnection (PCI), PCI express (PCIe), NVMe, a Universal Serial Bus (USB) interface, a Secure Digital (SD) card interface, a Multi-Media Card (MMC) interface, an eMMC interface, a UFS interface, an embedded UFS (eUFS) interface, and a Compact Flash (CF) card interface, but not limited thereto.

In a non-limiting embodiment, the host interface may be configured to implement the Peripheral Component Interface express (PCIe) standard for connecting peripherals such as NVMe based SSD device 220 with the host device 210.

A storage device may utilize a SLC buffer for temporarily storing data to be written to the QLC region of the storage device. When the storage device receives a write command, at least two stages of data transfer are performed. In the first stage of transfer, data associated with a write command is first written in SLC buffer. In the second stage, the data from the SLC buffer is read and then written to the QLC region. However, such data transfer involving the SLC buffer increases latency of the operations and also results in significant read/write performance impact.

The present application discloses the storage device 220 for writing data to a NAND flash memory region. The at least one processor 230 is configured to receive from the host device 210, one or more commands to write data in the NAND flash memory region. The one or more commands include data to be written and corresponding instructions for the storage device 220. In an embodiment of the present disclosure, the NAND flash memory region is a Quad-Level Cell (QLC) region.

Each command of the one or more commands includes a data block and a write request to write the data block in a page of the NAND flash memory region. The at least one processor 230 is configured to perform a set of operations of a predefined routine for writing the data to the NAND flash memory region, based on the one or more commands. The at least one processor 230 is configured to refrain from transmitting or to prevent the transmission, to the host device 210, of a completion indication i.e., a first completion indication of the set of operations. In related art, the completion indication is sent to the host device 210 as soon as the set of operations are performed. However, in the present disclosure, the at least one processor 230 refrains from sending or prevents the sending of the first completion indication for a predefined period of time. The at least one processor 230 is configured to re-request the data blocks or re-receive the data blocks associated with the one or more commands from the host device 210 for performing a subsequent set of operations of the predefined routine.

In another non-limiting embodiment of the present disclosure, the at least one processor 230 is configured to re-request the one or more commands from the host device 210, based on a Physical Region Page (PRP) or Scatter Gather List (SGL) information of the storage device 220. The PRP and SGL are standard data transfers mechanisms typically used in NVMe SSDs. The PRP information provides a list of PRP entries that describe multiple physical memory segments as a single memory buffer. The SGL allows for efficient large data transfers and provides a list of logical segments, with each segment defined by an SGL descriptor. The host device 210 typically sets the PRP or SGL in a write command, to inform the source of a memory location. PRP and/or SGL may be used by the host device 210 to set the location of data buffer(s) in memory for read and write operations. PRP and SGL may be used in direct memory access (DMA) transfers between the host device 210 and an NVMe SSD.

The at least one processor 230 is configured to perform the subsequent set of operations of the predefined routine, on receiving the data blocks for writing the data to the NAND flash memory region.

In another non-limiting embodiment of the present disclosure, the at least one processor 230 is further configured to transmit a completion indication i.e., a second completion indication of the predefined routine, upon completion of the subsequent set of operations.

In another non-limiting embodiment of the present disclosure, the at least one processor 230 is further configured to write the data block corresponding to each of the one or more commands, into another NAND flash memory region of the storage device, when a Normal Power Off (NPO) command is received from the host device 210 and thereafter terminate the predefined routine. That is, based on a Normal Power Off (NPO) command being received from the host device 210 (e.g. before completion of the set of operations of the predefined routine), the at least one processor 230 is further configured to write the data block corresponding to each of the one or more commands, into another NAND flash memory region of the storage device and terminate the predefined routine. The other NAND flash memory region may be a SLC region 228. The NPO command simply refers to the standard way of turning off the host device 210. The NPO command may be a command for powering off the storage device 220. In response to receiving the NPO command, the storage device 220 may perform actions to flush volatile data to non-volatile storage and prepare for power off. Following these actions, the storage device 220 may power off. Since the NPO command may result in loss of data, the data to be written to the QLC region is written to the SLC region 228 until the power is turned on.

In another non-limiting embodiment of the present disclosure, the at least one processor 230 is further configured to release the data blocks corresponding to each of the one or more commands, when within a predefined time period, a number of commands received from the host device 210 equals to zero. In other words, if no write commands are received in a predefined interval of time, the data blocks stored in the SRAM or the QLC region are released. In addition or alternatively, the at least one processor 230 is further configured to release the data blocks corresponding to each of the one or more commands, when within a predefined time period, a size of the data blocks received from the host device 210 is less than a page size of the predefined routine and thereafter terminate the predefined routine. That is, if a program distance worth of data is not received from the host device 210 in a predefined interval of time, the data blocks stored in the SRAM or the QLC region are released.

In another non-limiting embodiment of the present disclosure, the host device 210 is configured to enable a direct write mode of the storage device 220. The direct write mode when enabled allows the host device 210 to directly write data to a QLC region of the storage device 220. In case the direct write mode is disabled, the conventional techniques of a staged QLC write operation are performed when a write command is received from the host device 210. The technique of the present disclosure is configured to trigger enabling as well as disabling of direct write mode of the storage device 220.

In the direct write mode, the host device 210 is configured to transmit one or more commands to write data in a NAND flash memory region of the storage device 220. Each command of the one or more commands comprises a data block and a write request to write the data block in a page of the NAND flash memory region. Upon transmission of the write command, the host device 210 is configured to send a trigger signal for enabling a direct write mode of the storage device 220.

In one embodiment, the host device 210 is configured to transmit the one or more commands to write data in the NAND flash memory region of the storage device 220 and thereafter the host device 210 is configured to enable the direct write mode of the storage device 220.

In an embodiment of the present disclosure, the one or more commands include an indication that triggers the enabling of a direct write mode.

In an embodiment of the present disclosure, the host device 210 is configured to send a trigger signal for enabling a direct write mode of the storage device 220 and then transmit the one or more commands to write data in a NAND flash memory region of the storage device 220.

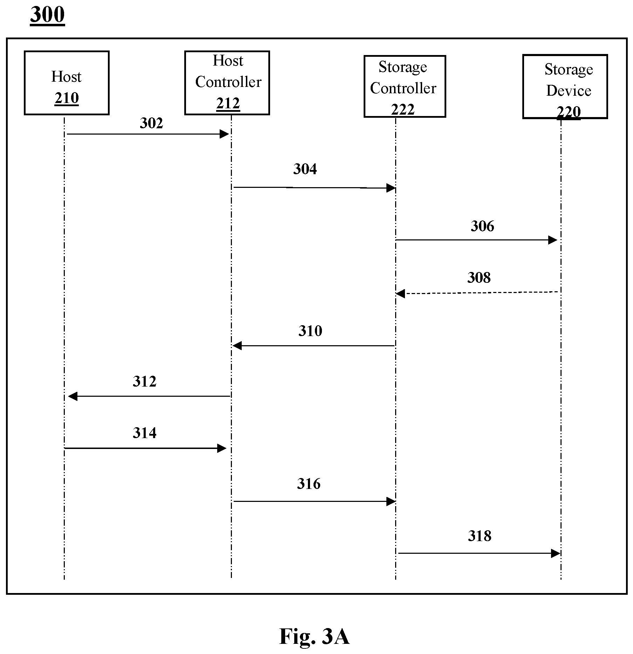

Fig. 3A illustrates a sequence diagram 300 showing sequence of operations involved in execution of a write command, in accordance with the embodiments of the present disclosure.

In accordance with the present disclosure, a QLC direct write operation is illustrated. The direct write operation may include four components of the system 200 such as the host device 210, a host controller 212, a storage controller 222 and the storage device 220. At operation 302 of the illustrated figure, the host device 210 transmits commands to the host controller 212 for writing data to a QLC region of the storage device 220. The data to be written may be buffered in one or more chunks of a predetermined size. In one embodiment, the predetermined size may be equal to a QLC program size.

At operation 304, the data to be written is transferred to a SRAM buffer from the host controller 212 via the storage controller 222. Before initiating the writing of data to the SRAM buffer, the SRAM buffer may be freed based on receipt of an acknowledgement from the storage back-end module of the storage device 220. In one embodiment, the host front-end module of the host device 210 may be aware of the QLC program distance. In an embodiment, the storage controller 222 notifies the host front-end module about the QLC program distance or amount of data to be buffered in the SRAM. Based on the QLC program distance, the host front-end module tracks the write commands of various sizes and ensures that data worth QLC program size are buffered in SRAM. The host front-end module then calculates and keeps the required number of commands outstanding to the host device 210 until the storage controller 222 indicates the data is programmed.

At operation 306, the storage controller 222 issues a first part of a generally multi-part process of the QLC program for execution of the write command received by the host device 210. Upon completion of the first part of the QLC program at operation 308, the storage device 220 sends an indication, i.e., a first completion indication of completion of the first part of the QLC program to the storage controller 222. At operation 310, the storage controller 222 issues a data re-request to the host device 210 to receive data for performing the further steps of the QLC program.

In other words, the storage controller 222 indicates to the host front-end module when a re-request needs to be sent to the host device 210. In an embodiment, the storage back-end module may initiate the request for data to the storage front-end module and thereafter the storage front-end module sends a re-read request to the host front-end module. Using NVMe handshakes with the host device 210, the host front-end module fetches the data again from host device 210 based on the outstanding commands known. The host front-end module initiates re-read of data to host device 210 based on PRP information.

At operation 312, the host controller 212 requests the data from the host device 210. At operation 314, data is re-sent to the host controller 212. Upon retrieving the data from the host device 210, at operation 316, the re-sent data is transferred to the SRAM from the host controller 212 via the storage controller 222.

At operation 318 the subsequent steps of the QLC program is issued for execution. Finally, upon completion of the subsequent steps of the QLC program, the storage device 220 sends an indication of completion, i.e., a second completion indication of the QLC program to the storage controller 222. Particularly, once multistage program is completed, the storage controller 222 indicates program completion status to the host front-end module and in turn the host front-end module indicates program completion, to the host device 210. In one embodiment, the program completion indication is sent via a completion status message.

In comparison with Fig. 1A, Fig. 3A illustrates the steps of directly writing data to the QLC region of the storage device 220. As soon as the data is received from the host device 210, via the one or more write commands, the first step of the QLC program is issued and upon completion of first step, data is re-requested from the host device 210 for performing the subsequent steps of the QLC program. Therefore, the embodiments of the present disclosure provide a direct approach of data writing to the QLC region and provide various advantages such as ensuring high performance and minimizing the dependency on SLC and SRAM requirements.

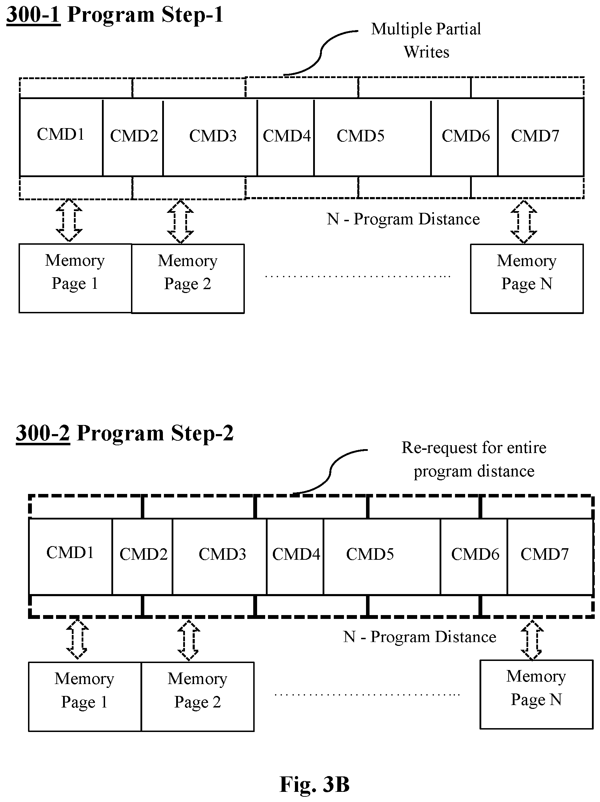

Fig. 3B illustrates environment diagrams 300-1 and 300-2 showing partial execution of a write command in at least two program steps, in accordance with the embodiments of the present disclosure.

As discussed herein, when host device 210 sends write commands to the storage device for execution, the storage device 220 may partially execute one or more commands based on a size of a memory page 104 that is currently available for writing data onto it. Thus, methods in related art partially write data associated with a write command based on the size of an available memory page.

The QLC program may comprise one or more steps. Fig. 3B depicts a 2-step QLC program having steps 300-1 and 300-2, respectively. It must be understood that the disclosure is not limited thereto. In Fig. 3B, the host device 210 transmits a total of 7 write commands to the storage device 220. The storage device 220 takes into account the program distance value N of the QLC program and configures to process the write commands based on the program distance value N. The program distance value N is a preconfigured value that indicates that the write commands can be executed for N memory pages worth of data, i.e., the data corresponding to a set of write commands may be written to N memory pages in the program step-1. This allows for partial execution of the write commands. The techniques of the partial execution of the present disclosure is dependent on the program distance value of the QLC program. In program step-2, the data is requested from the host device 210 for the entire program distance (i.e., for N memory pages worth of data). Upon completion of the program step-2, the second completion indication of the QLC program is sent to the storage device 220.

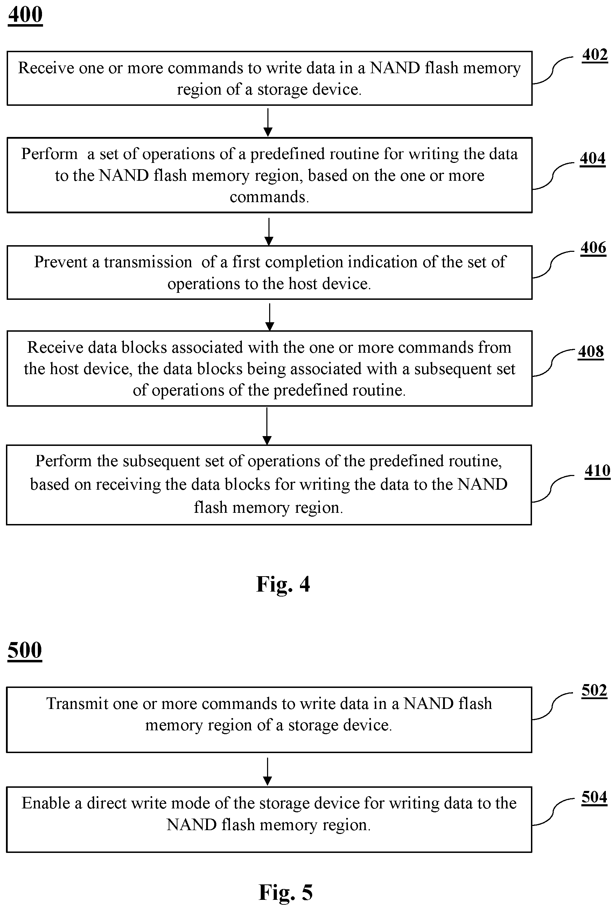

Referring now to Fig. 4 which illustrates an example flow chart of a method 400 performed by a storage device, for writing data to the storage device 220, in accordance with the embodiments of the present disclosure.

The various operations of method 400 may be performed by the storage device 220 (particularly, using the storage controller 222 or the at least one processor 230 of the SSD device 220).

The method 400 may comprise at block 402, receiving, from the host device 210, one or more commands to write data in a NAND flash memory region of a storage device 220. Each command of the one or more commands comprises a data block and a write request to write the data block in a page of the NAND flash memory region.

The method 400 may further comprise at block 404, performing a set of operations of a predefined routine for writing the data to the NAND flash memory region, based on the one or more commands. In one embodiment of the present disclosure, the performing of the set of operations comprises writing the data block corresponding to each of the one or more commands, into a Single Level Cell (SLC) region of the storage device 220, when a Normal Power Off (NPO) command is received from the host device 210 and thereafter terminating the predefined routine.

In another embodiment of the present disclosure, the performing of the set of operations includes releasing the data blocks corresponding to each of the one or more commands, when within a predefined time period, a number of commands received from the host device 210 equals to zero. The performing of set of operations includes releasing the data blocks corresponding to each of the one or more commands, when within a predefined time period, a size of the data blocks received from the host device 210 is less than a page size of the predefined routine and thereafter terminating the predefined routine.

Subsequently, at block 406, the method may comprise refraining from transmitting or preventing the transmission of a first completion indication of the set of operations to the host device 210.

The method 400 may further comprise at block 408, re-requesting the data blocks or re-receiving the data blocks associated with the one or more commands from the host device 210 for performing a subsequent set of operations of the predefined routine.

In one embodiment of the present disclosure, the re-requesting or receiving of the one or more commands from the host device 210 is based on Physical Region Page (PRP) or Scatter Gather List (SGL) information of the storage device 220.

At block 410, the method 400 may comprise performing the subsequent set of operations of the predefined routine, on receiving the data blocks for writing the data to the NAND flash memory region.

In one non-limiting embodiment, the method 400 may further comprise transmitting a second completion indication of the predefined routine, upon completion of the subsequent set of operations.

Fig. 5 illustrates an example flow chart of a method 500 performed by a host device for enabling writing of data to a storage device 220, in accordance with the embodiments of the present disclosure.

The various operations of the method 500 may be performed by the host device 210 (particularly, using the host controller 212 of the host device 210).

At block 502, the method 500 comprises transmitting, by the host device 210, one or more commands to write data in a NAND flash memory region of a storage device 220. Each command of the one or more commands comprises a data block and a write request to write the data block in a page of the NAND flash memory region.

The method 500 further comprises at block 504, enabling a direct write mode of the storage device 220 for writing data to the NAND flash memory region.

In another non-limiting embodiment, the method 500 further comprises disabling the direct write mode of the storage device 220 for writing data to the NAND flash memory region.

The above methods 400 and 500 may be described in the general context of computer executable instructions. Generally, computer executable instructions can include routines, programs, objects, components, data structures, procedures, modules, and functions, which perform specific functions or implement specific abstract data types.

Embodiments of the present disclosure provides one or more technical advantages. The presently disclosed techniques improves the writing performance of SSDs. Further, the techniques of present disclosure minimizes the SRAM requirement in SSDs and minimizes the dependencies on temporary buffers such as SLCs. The present techniques ensure high performance by providing a direct approach of data writing to the QLC region and thereby overcoming the issue of staging a QLC write operation.

The order in which the various operations of the methods are described is not intended to be construed as a limitation, and any number of the described method blocks can be combined in any order to implement the method. Additionally, individual blocks may be deleted from the methods without departing from the scope of the subject matter described herein. Furthermore, the methods can be implemented in any suitable hardware, software, firmware, or combination thereof.

The various operations of methods described above may be performed by any suitable means capable of performing the corresponding functions. The means may include various hardware and/or software component(s) and/or module(s) shown in Fig. 2. Generally, where there are operations illustrated in Figures, those operations may have corresponding counterpart means-plus-function components. It may be noted here that the subject matter of some or all embodiments described with reference to Fig. 2 may be relevant for the methods 400 and 500 and the same is not repeated for the sake of brevity. Further, the present disclosure has been explained by considering the storage device as NVMe SSDs. However, it may be noted that the teachings of the present disclosure are equally applicable for other types of DRAM-less NVMe storage devices.

In a non-limiting embodiment of the present disclosure, one or more non-transitory computer-readable media may be utilized for implementing the embodiments consistent with the present disclosure. Certain aspects may comprise a computer program product for performing the operations presented herein. For example, such a computer program product may comprise a computer readable media having instructions stored (and/or encoded) thereon, the instructions being executable by one or more processors to perform the operations described herein. For certain aspects, the computer program product may include packaging material.

Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

## Claims

1. A method of writing data to a NAND flash memory region of a storage device, the method is executed by at least one processor, individually or collectively, the method comprising:
receiving (402), from a host device, one or more commands to write data in the NAND flash memory region of the storage device, wherein each command of the one or more commands comprises a data block and a write request to write the data block in a page of the NAND flash memory region;
performing (404) a set of operations of a predefined routine for writing the data to the NAND flash memory region, based on the one or more commands;
preventing (406) a transmission of a first completion indication of the set of operations to the host device;
receiving (408) data blocks associated with the one or more commands from the host device, the data blocks being associated with a subsequent set of operations of the predefined routine; and
performing (410) the subsequent set of operations of the predefined routine, based on receiving the data blocks for writing the data to the NAND flash memory region.

2. The method as claimed in claim 1, further comprising transmitting a second completion indication of the predefined routine, upon completion of the subsequent set of operations.

3. The method as claimed in claim 1 or claim 2, wherein the receiving (402) of the one or more commands from the host device is based on Physical Region Page or Scatter Gather List information of the storage device.

4. The method as claimed in any preceding claim, wherein the performing (404) the set of operations further comprises:
based on receiving a Normal Power Off command from the host device, writing a respective data block associated with each of the one or more commands, into another NAND flash memory region of the storage device; and
terminating the predefined routine.

5. The method as claimed in any preceding claim, wherein the performing (404) the set of operations further comprises:
releasing the data blocks associated with each of the one or more commands, based on one or more of:
a number of commands received from the host device, within a predefined time period, being equal to zero, and
a size of the data blocks received from the host device, within the predefined time period, being less than a page size of the predefined routine; and
terminating the predefined routine.

6. The method as claimed in any preceding claim, wherein the NAND flash memory region is a Quad-Level Cell region.

7. A storage device for writing data to a NAND flash memory region, the storage device comprising:
a Non-Volatile Memory comprising the NAND flash memory region; and
at least one processor configured to collectively or individually:
receive (402), from a host device, one or more commands to write the data in the NAND flash memory region, wherein each command of the one or more commands comprises a data block and a write request to write the data block in a page of the NAND flash memory region;
perform (404) a set of operations of a predefined routine for writing the data to the NAND flash memory region, based on the one or more commands;
prevent (406) a transmission of a first completion indication of the set of operations to the host device;
receiving (408) data blocks associated with the one or more commands from the host device, the data blocks being associated with a subsequent set of operations of the predefined routine; and
perform (410) the subsequent set of operations of the predefined routine based on receiving the data blocks for writing the data to the NAND flash memory region.

8. The storage device as claimed in claim 7, wherein the at least one processor is further configured to, individually or collectively, transmit a second completion indication of the predefined routine, upon completion of the subsequent set of operations.

9. The storage device as claimed in claim 7 or claim 8, wherein the at least one processor is further configured to, individually or collectively, receive the one or more commands from the host device based on Physical Region Page or Scatter Gather List information of the storage device.

10. The storage device as claimed in any of claims 7-9, wherein to perform the set of operations, the at least one processor is further configured to, individually or collectively:
based on a Normal Power Off command being received from the host device, write the data block corresponding to each of the one or more commands, into another NAND flash memory region of the storage device; and
terminate the predefined routine.

11. The storage device as claimed in any of claims 7-10, wherein to perform the set of operations, the at least one processor is further configured to, individually or collectively:
release the data blocks associated with each of the one or more commands, based on one or more of:
a number of commands received from the host device, within a predefined time period, being equal to zero, and
a size of the data blocks received from the host device, within the predefined time period, being less than a page size of the predefined routine; and
terminate the predefined routine.

12. The storage device as claimed in any of claims 7-11, wherein the NAND flash memory region is a Quad-Level Cell region.

13. A method of enabling writing of data to a NAND flash memory region of a storage device, the method being executed by one or more processors of a storage system, the method comprising:
transmitting (502), by a host device, one or more commands to write data in the NAND flash memory region of the storage device, wherein each command of the one or more commands comprises a data block and a write request to write the data block in a page of the NAND flash memory region; and
enabling (504) a direct write mode of the storage device for writing the data to the NAND flash memory region.

14. The method as claimed in claim 13, wherein the NAND flash memory region is a Quad-Level Cell region.

15. The method as claimed in claim 13 or claim 14, further comprising:
receiving (402), from the host device, one or more commands to write the data in the NAND flash memory region of the storage device;
performing (404) a set of operations of a predefined routine for writing the data to the NAND flash memory region, based on the one or more commands;
preventing (406) a transmission of a first completion indication of the set of operations to the host device;
receiving (408) data blocks associated with the one or more commands from the host device, the data blocks being associated with a subsequent set of operations of the predefined routine; and
performing (410) the subsequent set of operations of the predefined routine, based on receiving the data blocks for writing the data to the NAND flash memory region.
